# EUROPEAN PATENT APPLICATION

(11) **EP 4 417 825 A1**
(43) Date of publication of application: **21.08.2024**
(21) Application number: 24157817.8
(22) Date of filing: 15.02.2024
(51) Int. Cl.: F16B 19/10

(54) **BLIND FASTENER**

(30) Priority: 17.02.2023 US 202363485780 P
(71) Applicant: Centrix Inc., Kent, WA 98032 (US)
(72) Inventor: McClure, Travis, Chelan Falls, 98817 (US)
(74) Representative: DTS Patent- und Rechtsanwälte PartmbB

(57) **Abstract**

A fastener including a screw configured to threadingly engage a drive sleeve and method for fastener operation. The fastener, in one example, further includes a collet body with legs that extend from a crown, where each of the legs includes a clamping foot that extends therefrom and wherein each of the clamping feet mate with a sleeve opening in the drive sleeve. The fastener further includes a housing that mates with the drive sleeve such that rotation of the drive sleeve is prevented and vertical translation is permitted.

## Description

### CROSS REFERENCE TO RELATED APPLICATION

The present application claims priority to U.S. Provisional Application No. 63/485,780, entitled "BLIND FASTENER", and filed on February 17, 2023. The entire contents of the above-listed application are hereby incorporated by reference for all purposes.

### FIELD

The present description relates generally to a blind fastener designed to clamp multiple structures.

### BACKGROUND AND SUMMARY

Many manufacturing fields use fasteners, such as blind fasteners, for securing multiple objects to one another. Blind fasteners are particularly useful when only one side of a joint is accessible. One application of these fasteners is in the aerospace industry where removable collet fasteners are utilized to secure floor panels to underlying floor beams. In other examples, the collet fasteners may be used to attach wing components, fuselage components, pylons, and the like, to increase manufacturing adaptability. Previous blind fasteners have included a screw which interacts with a collet body to expand clamping legs in the collet body. When expanded, the legs act as a lower clamping arm to enable axial workpiece stack clamping.

However, the inventor has recognized several drawbacks with previous blind fasteners. For instance, the collet body, and particularly the collet body legs, in certain fasteners may be susceptible to shear stresses due to the accumulating effect of the stresses attributed to the legs being opened and then additionally of being clamped. Other fasteners have relatively large minimum grip lengths, thereby constraining the fastener's applicability. Still further, other collet based fasteners have experienced alignment issues due to the collet body legs bending inward and becoming misaligned with the workpieces when in an unclamped configuration which is used for installation and removal.

Attempts have been made to transfer loads away from the collet body to reduce the chance of collet body degradation in certain fasteners. Other fasteners have made attempts to achieve a low stack height grip. However, the inventor has recognized that previous fasteners have not achieved strength and grip range targets, for certain manufacturing scenarios.

Facing the aforementioned challenges, the inventor developed a fastener to overcome at least a portion of the issues with prior fasteners. The fastener includes a screw configured to threadingly engage a drive sleeve. The fastener further includes a collet body. The collet body may include a crown with multiple legs that extend therefrom, in one example, or may include multiple partial crowns each with a leg that extend therefrom, in another example. Each leg in the collet body includes a clamping foot extending therefrom and each of the clamping feet mate with a sleeve opening in the drive sleeve. The fastener further includes a housing that mates with the drive sleeve such that rotation of the drive sleeve is prevented and vertical translation is permitted. In this way, the load path through the fastener can be directed from the clamping feet to the drive sleeve which can carry more load than the collet body legs are capable of while also allowing the fastener to achieve a comparatively small minimum grip length. Thus, the fastener is able to carry greater loads and clamp workpieces with a greater stack height variance and particularly workpieces with a relatively short stack height. Consequently, the fastener's applicability and customer appeal is increased.

In one example, the housing may include vertical slots that mate with drive sleeve protrusions and each of the sleeve openings extends outward through one of the drive sleeve protrusions. In this way, the fastener's anti-rotation and axial translation features is space efficiently incorporated into the housing, thereby increasing the fastener's compactness. The vertical slots and the drive sleeve protrusions may also serve to align the workpieces because they are formed by removing material from a cylinder which leaves a relatively cylindrical profile able to allow for improved alignment. Further, the circular sections between the housing slots do not bend inward during clamping, enabling the fastener to achieve further improvements in alignment when compared to previous collet based fasteners without a housing that can fall out of alignment when the collet is closed during fastener installation and removal.

Further in one example, the drive sleeve protrusions may axially extend to a distal end of the drive sleeve and the vertical slots extend to a distal end of the housing. In this way, the fastener's grip range is increased, further expanding the fastener's adaptability.

Even further, in one example, the fastener may be configured with free-spin functionality that enables the screw to be unthreaded from the drive sleeve and independently rotate. In this way, component degradation caused by over-torqueing the screw in an unclamping direction can be avoided, if desired.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIGS. 1A-5B show different views of a first example fastener.
FIGS. 6A-6F show different views of a second example fastener.
FIGS. 7A-10 show different views of a third example fastener.
FIGS. 11A-14 show different views of a fourth example fastener.
FIG. 15 shows a method for installing and removing a fastener.

### DETAILED DESCRIPTION

Fasteners that achieve increased load carrying capacity and a decreased minimum grip lengths are described herein. To achieve these characteristics, the fasteners include one or more collet body feet that extend though openings in a drive sleeve. Additionally, the drive sleeve is configured to mate with a housing and axially translate in relation to the housing while rotation between the drive sleeve and the housing is inhibited. In this way, the fasteners are able to achieve desired grip range characteristics in a space efficient package.

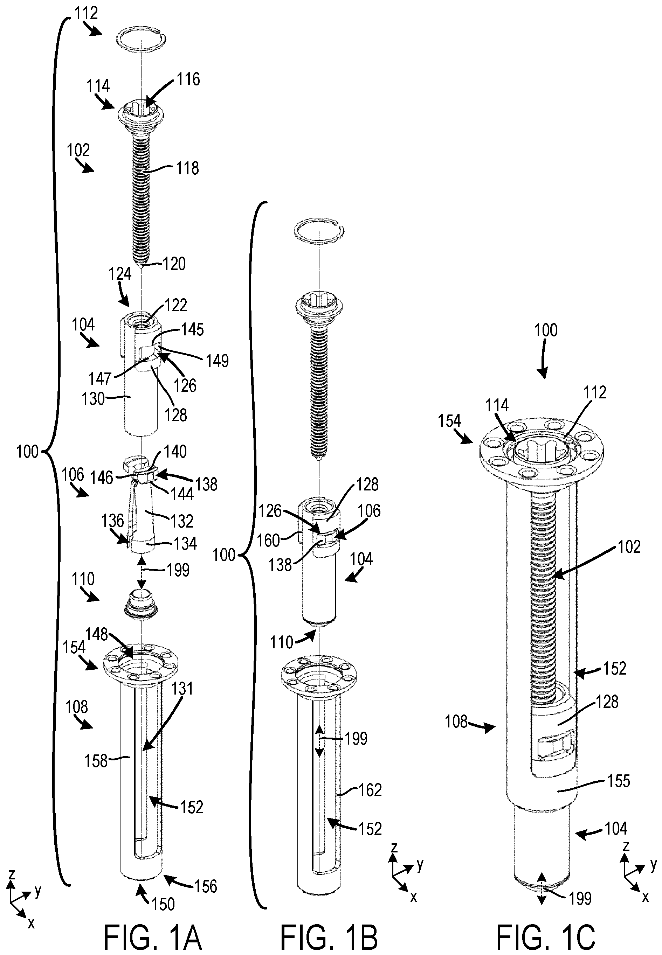

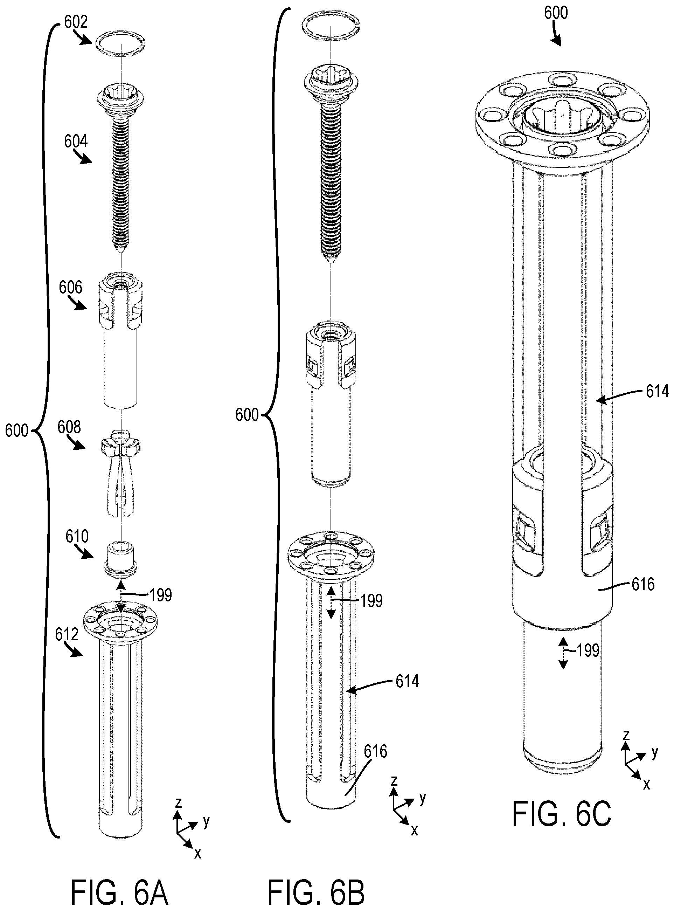

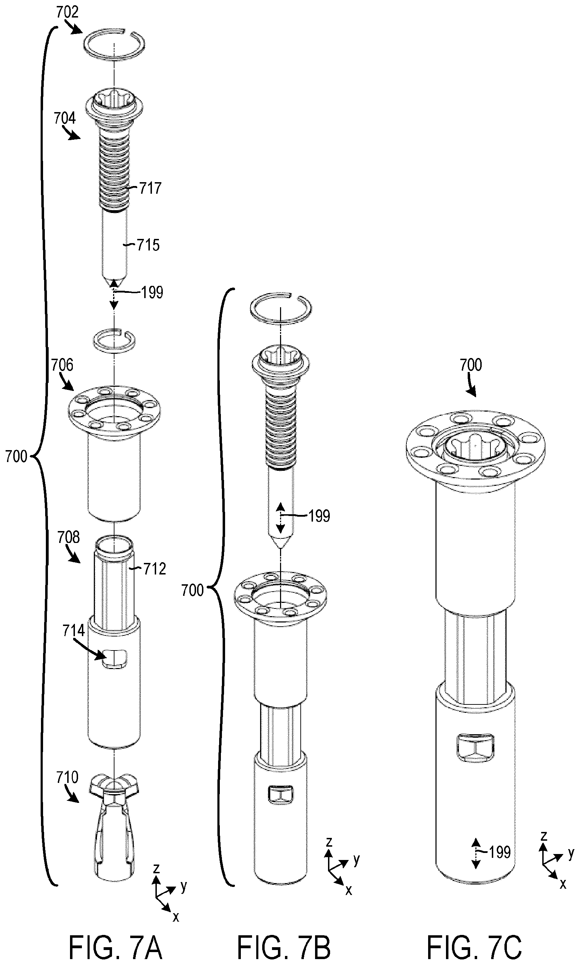

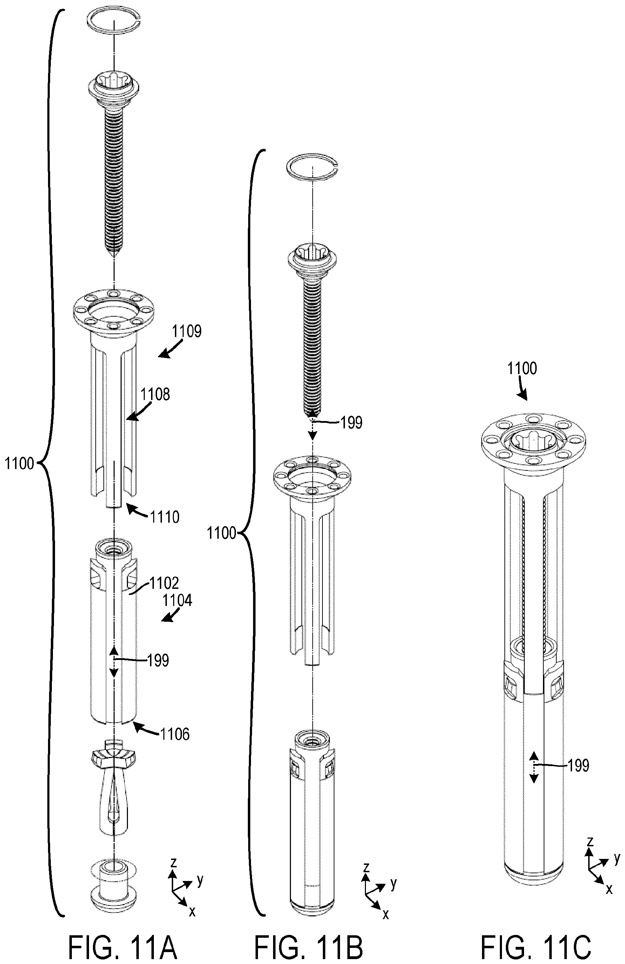

A first example of a fastener with two collet legs and feet is depicted in FIGS. 1-5B. A second example of a fastener with three collet legs and feet is depicted in FIGS. 6A-6F. A third example of a fastener with a housing that at least partially circumferentially encloses a drive sleeve is depicted in FIGS. 7A-10. A fourth example of a fastener with a drive sleeve that includes protrusions that are axially extended in comparison to the first example fastener and the second example fastener is depicted in FIGS. 11A-14.

FIG. 1A shows a fastener 100 (e.g., blind fastener or single sided fastener) with a screw 102, a drive sleeve 104, a collet body 106, and a housing 108. The collet body may include two separate clamping legs that each extend from a partial crown, as is illustrated in FIG. 1A or may include a crown with multiple clamping legs which extend therefrom, in an alternate example. Using a collet body with multiple partial crowns which each have a leg extending therefrom allows each leg to be independently installed but will mirror each other with regard to their operational functionality.

Further, in the illustrated example, the fastener 100 includes a cap 110 and a retaining ring 112 (e.g., a circlip). The cap 110 may be coupled to the housing via press fitting, welding, gluing, threading, a combination thereof, and the like. However, in alternate examples, the cap may be omitted from the fastener.

The screw 102 includes a head 114 with a drive tool interface 116. The drive tool interface may take a variety of forms such as a polygonal recess (e.g., a hexagonal recess, an octagonal recess, a square recess, etc.), a star recess (e.g., a four, six, or eight point star recess), a polygonal protrusion that is designed to mate with a socket, and the like. The screws in the other example fasteners described herein may also have a drive tool interface which may be in the form of a recess or an external tooling feature which mates with a socket.

The screw 102 further includes a threaded portion 118 and a distal tip 120. The distal tip is tapered, in the illustrated example. However, the tip may have different contours, such as a flat or round contour, in other examples. In the illustrated example, the threaded portion of the screw extends down to the distal tip. However, fasteners with partially threaded screws have been contemplated. For instance, the screw may include an unthreaded portion that is positioned below the threaded portion.

The drive sleeve 104 includes a threaded interior section 122 at an upper side 124, in the illustrated example. Further, the drive sleeve 104 includes sleeve openings 126 and protrusions 128. To elaborate, the sleeve openings 126 radially extend outward through the protrusions 128, in the illustrated example. However, in other examples, the sleeve openings may be positioned in another location in the drive sleeve, such as below or above the protrusions. The protrusions 128 are designed with anti-rotation and axially translation functionality which is expanded upon herein. The protrusions 128 extend radially outward from a body 130 of the drive sleeve 104 and are positioned on the upper side 124 of the sleeve. However, the protrusions may be positioned lower down the body, in alternate examples. The body 130 of the drive sleeve 104 may have a substantially constant outer diameter to enable the drive sleeve to mate with the housing's internal bore 131.

The collet body 106 may include multiple flexible legs 132 (e.g., cantilever legs) that axially extend from a crown 134, in one example. In such an example, the crown may include a slit 136 to allow the crown's diameter to decrease when inserted into the drive sleeve 104. However, in alternate examples, the collet body may include multiple components (which each include a crown section and a flexible leg with a foot that extends from the crown section) that are separate from one another. The collet bodies in the other fasteners described herein may have these different collet body variants (e.g., a crown with multiple legs or multiple separate partial crown-leg components). Further, as discussed in greater detail herein the collet body may include a greater number of legs with feet. Even further in other examples, the fasteners described herein may include a single leg with a foot.

Each of the legs 132 includes a foot 138 which acts as a workpiece clamping surface when the fastener is installed and clamping multiple workpieces. The legs 132 bend inward and outward based on their interaction with the screw 102 and subsequently extend or retract the feet 138. The feet 138 are shown positioned vertically above the crown 134 in the illustrated example. In this way, the fastener's minimum grip length is decreased in comparison to a fastener which includes a collet body with the crown positioned vertically above the feet. However, in other examples, the feet may be positioned vertically below the crown.

The feet 138 each include an upper side 140, a lower side 144, and a lateral side 146. The feet 138 mate with the corresponding sleeve opening 126. Further, in the illustrated example, each of the sleeve openings 126 has an upper side 145, a lower side 147, and lateral sides 149. However, in other examples, the sleeve opening may have a different contour such as a curved (e.g., a round or oval) contour. During the mating between the feet and the sleeve openings, the upper, lower, and lateral sides of the feet are enclosed by the sleeve opening.

The housing 108 includes an upper opening 148 and a lower opening 150. Further, in the illustrated example, the housing 108 includes vertically extending slots 152. To elaborate, the slots 152 extend from a head 154 of the housing 108 to a termination point above the lower end 156 of the housing. However, in other examples, the slots may extend from the head to the lower end of the housing. Even further in other examples, the slots may extend into the housing head. The housing 108 further includes a body 158 that forms the sections between the slots. An axis system is provided in FIG. 1A as well as FIG. 1B-14, for reference. The z-axis may be a vertical axis (e.g., parallel to a gravitational axis), the x-axis may be a lateral axis (e.g., horizontal axis), and/or the y-axis may be a longitudinal axis, in one example. However, the axes may have other orientations, in other examples. Further, a central axis 199 of the fastener 100 depicted in FIG. 1A as well as the fasteners depicted in FIGS. 1B-14, for reference.

It will be appreciated that the screws in the fasteners described herein may rotate about the central axis when the fasteners are clamped and unclamped. Further, the clamping feet and legs expand away from and retract toward the central axis during fastener clamping and unclamping, respectively. Still further, the collet body axially translates along the central axis during fastener clamping and unclamping.

FIG. 1B shows the fastener 100 in a partially assembled state, where the collet body 106 and the cap 110 are mated with the drive sleeve 104. As shown, the feet 138 of the collet body legs mate with the drive sleeve openings 126. The protrusions 128 in the drive sleeve 104 includes side surfaces 160 that interact with side surfaces 162 of the slots 152 in the housing 108 to prevent rotation of the drive sleeve 104 but permit axial translation of the sleeve when the fastener is assembled. The side surfaces 160 of the protrusions 128 may be substantially planar and angled (e.g., radially aligned), in one example. The side surfaces 162 of the slots may have a similar geometry to enable the sleeve and the housing to smoothly interact and provide the aforementioned anti-rotation and translation functionality. Further, the side surfaces 160 may be parallel to one another.

FIG. 1C shows the fastener 100 in an assembled state. In the assembled state, the screw 102 is threaded into the drive sleeve 104. Further, the drive sleeve 104 is mated with the housing 108. To elaborate, the protrusions 128 mate with the slots 152 such that the drive sleeve 104 is prevented from rotating during clamping and unclamping operation but is allowed to axially translate upwards and downwards. FIG. 1C further depicts the retaining ring 112 coupled to the housing head 154 to retain the screw head 114 therein. It will be appreciated, that as referred to herein, upwards and downwards indicates the relative movement and/or positioning along the fastener's central axis 199. Further, in certain scenarios, installation environments, etc., the fastener's central axis may not be aligned or parallel to a gravitational axis. FIG. 1C further shows sections 155 of the housing 108 that extends across the bottom of the slots 152. The housing sections 155 are specifically formed as a cylindrical housing section, in the illustrated example. However, other contours of the housing are possible. These sections inhibit the drive sleeve 104 from falling out of the bottom of the housing. In this way, the drive sleeve is axially delimited on a lower side of the housing. Further, the sections 155 of the housing 108, allow the fastener to be transitioned into a free-spin configuration which is expanded upon herein. The housing head 154 includes holes 157, in the illustrated example. During fastener installation, tooling may engage the holes 157 to prevent rotation of the housing. The other fasteners described herein may include similar holes in the housing head. Alternatively, the holes may be omitted from the housing head in alternate examples.

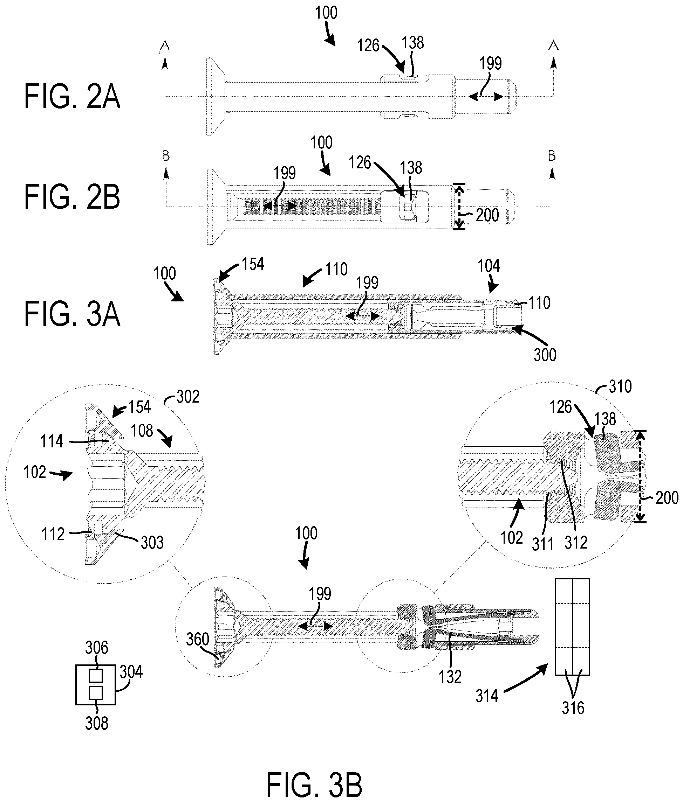

FIGS. 2A and 2B show the fastener 100 in an unclamped state. In the unclamped state the feet 138 mate with the sleeve openings 126 but do not extend beyond the outer diameter 200 of the drive sleeve 104. In this way, the fastener 100 may be smoothly inserted into workpiece openings.

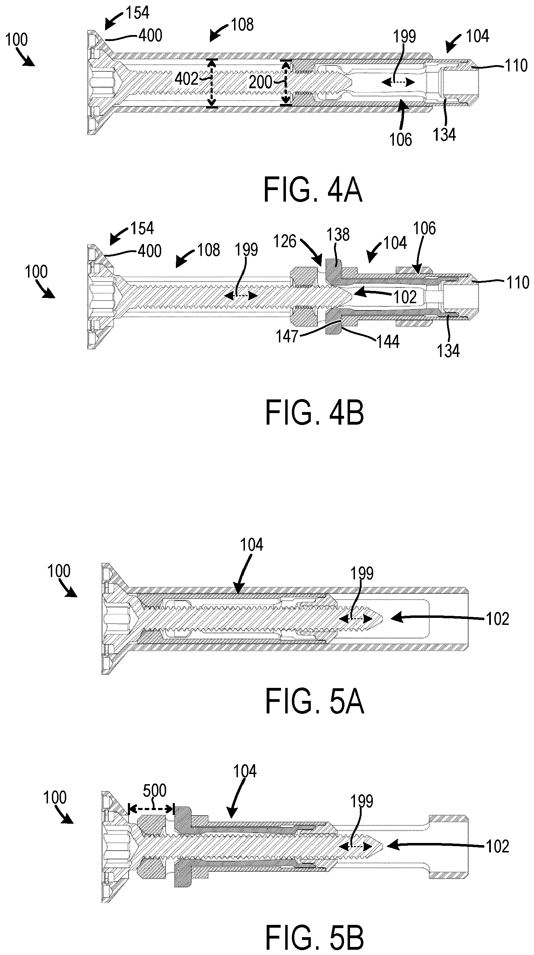

Cutting plane A-A, illustrated in FIG. 2A, denotes the cross-sectional view depicted in FIG. 3A as well as the cross-sectional views depicted in FIGS. 4A and 5A. However, it will be understood, that the fastener is in different clamping configurations in FIGS. 4A and 5A. Cutting plane B-B, illustrated in FIG. 2B, denotes the cross-sectional view depicted in FIG. 3B as well as the cross-sectional views in FIGS. 4B and 5B. However, it will be understood, that the fastener is in different clamping configurations in FIGS. 4B and 5B.

FIG. 3A shows the cap 110 of the fastener 100 mated with the distal opening 300 of the drive sleeve 104, in one example. In this way, the collet body 106 may be axially retained in the drive sleeve 104 at the lower end. Consequently, the fastener's components may be kept together as an assembly during transport, installation, and removal, thereby increasing the efficiency of the manufacturing process associated with the fastener. However, in an alternate example, the interaction between feet and the drive sleeve openings may keep the legs in the desired location and the cap may be omitted, in such an example.

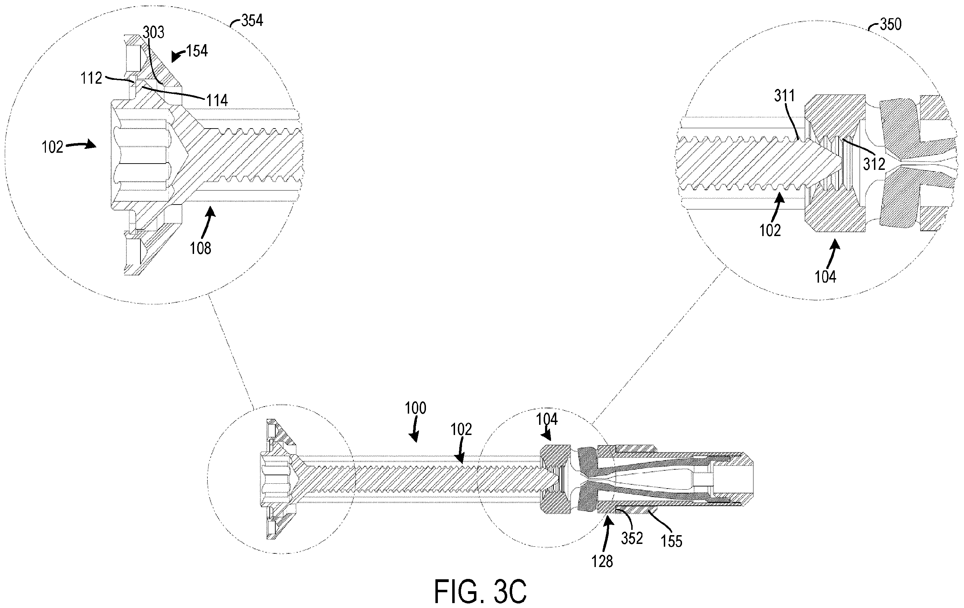

FIG. 3B further shows an enlarged view 302 of the head 154 of the housing 108 and the head 114 of the screw 102 in the fastener 100. As shown, the retaining ring 112 captures the screw head 114 in the housing head 154. To elaborate, the retaining ring 112 delimits the screw head's upwards axial movement and a seat 303 in the housing head 154 delimited the screw head's downward axial movement. In one example, the screw head's axial position may remain substantially constant (with regard to the housing) during certain configurations. To elaborate, the head 114 may be in contact with the seat 303 when the fastener is in the clamping configuration and in the unclamped non free-spin configuration. However, when the fastener is transitioned into a free-spin configuration (shown in FIG. 3C and expanded upon herein), the screw head's axial position moves upward to enable disengagement of the threads in the screw from the threads in the drive sleeve. As such, the distance between the seat 303 and the retaining ring 112 may be selected to enable the screw head movement that allows the fastener to transition into and out of the free-spin configuration.

Further, it will be understood that to initiate clamping and unclamping operation in the fastener, the screw head may be rotated in a clockwise direction and a counterclockwise direction, or vice versa. In this way, the fastener may be used in space constrained operating environments.

A manually operated or automated tool may be used to rotate the screw head via the tooling interface while also resisting body rotation. For instance, an automated tooling apparatus 304 that may be used to manipulate the fastener, and carry out the methods described herein. The tooling apparatus 304, illustrated in FIG. 3B, may include a processor 306 and memory 308 (e.g., non-transitory memory) storing instructions executable by the processor. The automated tooling apparatus 304 may further include tooling attachments, arms, carriages, and the like, for manipulating the fastener as well as perform other manufacturing operations, for instance. The other fasteners described herein may be manipulated using a similar tooling apparatus.

FIG. 3B shows holes 157 (e.g., rounded holes) in the housing head 154. The tooling apparatus 304 may use the holes 157 to resist rotation of the housing 108. The housing may include additional or alternative features which allow the tooling apparatus to resist rotation of the housing. For instance, the housing may include a polygonal outer surface or extensions that allow the tooling apparatus to hold the housing stationary, in other examples.

FIG. 3B even further shows an enlarged view 310 of the drive sleeve 104 and the feet 138 of the collet body 106. Specifically, the feet 138 are shown mating with the drive sleeve openings 126. Further, the legs 132 are shown bent slightly inward, which is their neutral position. As such, the feet do not extend radially beyond the outer diameter 200 of the drive sleeve 104. However, in other examples the legs may have a different neutral position. Further, as shown, the threads 311 on the screw 102 are engaged with the threads 312 in the drive sleeve. As such, the fastener is in an unclamped configuration which can be efficiently inserted into openings 314 of workpieces 316 and then transitioned into a clamped configuration.

However, the fastener 100 may further be configured to transition into a free-spin configuration, as indicated above. FIG. 3C shows the fastener 100 in the free-spin configuration. In the free-spin configuration the screw is able to be independently rotated with regard to the drive sleeve which allows fastener degradation caused by over-torqueing the screw in the unclamping direction to be avoided. To transition the fastener into the free-spin configuration, the screw is further rotated in the unclamping direction (i.e., the direction that causes the fastener to transition from the clamped configuration to the unclamped configuration). Further, in the free-spin configuration, the threads 311 in the screw 102 are not engaged with the threads 312 in the drive sleeve 104 as shown at enlarged view 350. In other examples, the screw may include a reduced diameter portion (which may be unthreaded) that may align with the threads in the drive sleeve but not engage the threads in the free-spin configuration.

The steps involved in implementing disengagement between the threads in the screw 102 and the threads in the drive sleeve 104, involve rotating the screw in the unclamping direction until a lower side 352 of the protrusions 128 is bottomed out on the housing section 155. After, the drive sleeve is bottomed out on the housing, further rotation of the screw in the unclamped direction urges the screw upwards (towards the retaining ring). To allow for the upward movement of the screw, an axial distance between the seat 303 in the housing head 154 and the retaining ring 112 accommodates for movement of the screw head 114, as shown in enlarged view 354. As illustrated, the screw head 114 is in contact with the retaining ring 112. Thus, in the free-spin configuration, the screw head is higher than in the non free-spin configuration. This axial movement of the screw head may be particularly useful in automated manufacturing scenarios where the screw head movement can be efficiently sensed by the tooling machines. The other fasteners described herein may additionally be designed with free-spin functionality to enhance the fastener's manufacturing capabilities.

FIGS. 4A and 4B show the fastener 100 in a first clamped state where the screw 102 threads into the drive sleeve 104 and urges the clamping feet 138 radially outward through the sleeve openings 126 such that the clamping feet act as a lower clamping arm, when the fastener is inserted into a workpiece stack. The housing head 154 conversely functions as an upper clamping arm.

The fasteners described herein are designed with axially clamping functionality. As such, the clamping forces are in axial directions as opposed to wedge type fasteners that exert (potentially damaging, in some cases) radially outward forces in addition to axial forces on the workpiece to secure the workpieces in a desired position.

As the screw 102 threads into the drive sleeve 104, the drive sleeve and collet body assembly is drawn upwards into the housing to decrease the axial distance between the clamping feet 138 and an upper clamping surface 400 that resides in the head 154 of the housing 108.

As shown in FIG. 4A, the outer diameter 200 of the drive sleeve 104 is less than the inner diameter 402 of the housing. FIG. 4A further shows the cap 110 mating with the crown 134 of the collet body 106 to help secure the collet body in a desired position, in one example. In another example, the cap may be omitted from the fastener, as previously indicated.

FIG. 4B shows the lower sides 144 of the feet 138 contacting the lower side 147 (e.g., lower side surface) of the sleeve openings 126. In this way, the loads through the fastener are directed to the drive sleeve as opposed to the collet body during fastener clamping. In this way, loads are transferred to a stronger component, thereby increasing the load carrying capacity of the fastener, and decreasing the chance of fastener degradation during clamping.

FIGS. 5A and 5B show the fastener 100 in another clamped state where the screw 102 has been further threaded into the drive sleeve 104 (in the clamping direction). To elaborate, the fastener 100 exhibits a grip length 500 which is at its minimum in FIGS. 5A and 5B. Therefore, the fastener 100 depicted in FIGS. 5A and 5B is at a minimum grip length configuration. It will be appreciated that this minimum grip length is smaller than many previous fasteners thereby expanding the fastener's capabilities and allowing the fastener to be used in space constrained environments, if desired. The fastener' s grip length, in the clamped configuration, can decreased via threading the screw in the unclamped direction. In this way, the grip length of the fastener is able to be efficiently adjusted.

FIG. 6A shows an exploded view of another example of a fastener 600. The fastener 600 again includes a retaining ring 602, a screw 604, a drive sleeve 606, a collet body 608, a cap 610, and a housing 612. The fastener 600 shown in FIG. 6A and the fastener 100 shown in FIG. 1A share at least some similar structural and functional features and redundant description of these overlapping features is omitted for brevity. However, the fastener 600 shown in FIG. 6A includes the collet body 608 with three legs. In this way, the clamping force may be more equally distributed on the workpieces.

FIGS. 6B and 6C show a partially assembled view of the fastener 600 and a fully assembled view of the fastener, respectively. The fastener 600 again includes slots 614 in the housing 612 and housing sections 616 at the bottom ends of the slots that inhibit the drive sleeve from falling out of the bottom of the fastener. The housing sections 616 are specifically formed as a cylindrical housing section, in the illustrated example. However, other contours of the housing are possible.

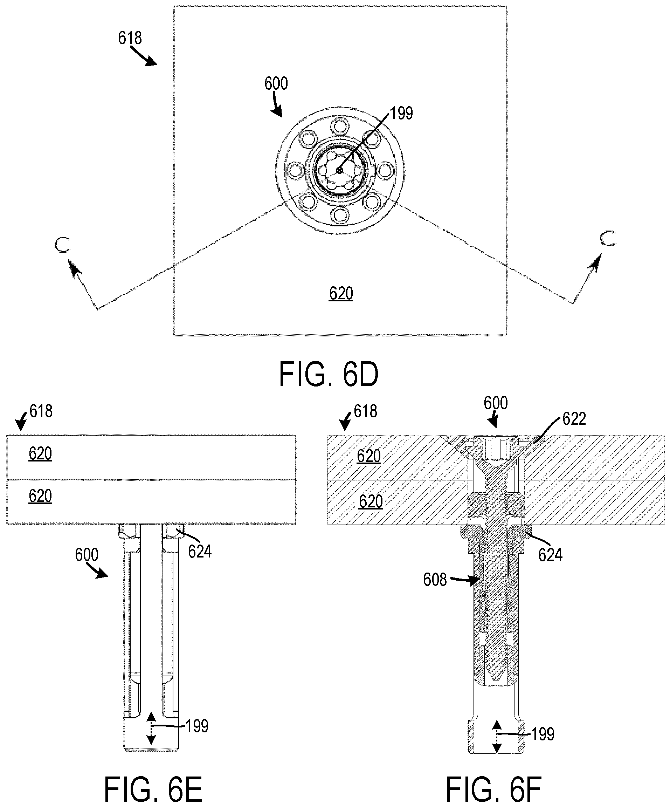

FIGS. 6D, 6E, and 6F show the fastener 600 inserted into a workpiece stack 618 in a clamped configuration. The workpiece stack 618 includes multiple workpieces 620. Cutting plane C-C shown in FIG. 6D defines the cross-sectional view depicted in FIG. 6F. As shown in FIGS. 6E and 6F, a head 622 of the housing 612 functions as an upper clamping arm and feet 624 in the collet body 608. It will be understood that the other fasteners described herein are capable of clamping workpieces in a similar manner with regard to the upper and lower clamping arms.

FIGS. 7A, 7B, and 7C show another example of a fastener 700 in an exploded state, a partially assembled state, and a fully assembled state, respectively. The fastener 700 share certain similar functional and structural features with the fastener 100, shown in FIG. 1A and the fastener 600 shown in FIG. 6A. For instance, the fastener 700 again includes a retaining ring 702, a screw 704, a housing 706, a drive sleeve 708, and a collet body 710. As such, redundant description of the overlapping features is omitted for concision.

However, the fastener 700 shown in FIG. 7A includes a different anti-rotation and translation feature than the other fasteners described herein. As shown in FIG. 7A, the drive sleeve 708 includes a section 712 that extends above the sleeve openings 714 and has a polygonal cross-section (in relation to a radial plane). The housing's interior opening has a correspondingly shaped polygonal cross-section. Hexagonal, octagonal, square, and rectangular cross-sections have been contemplated. Further, the screw 704 includes an unthreaded portion 715 with a reduced diameter below the threaded portion 717. However, in other examples, the reduced diameter portion of the screw may be threaded.

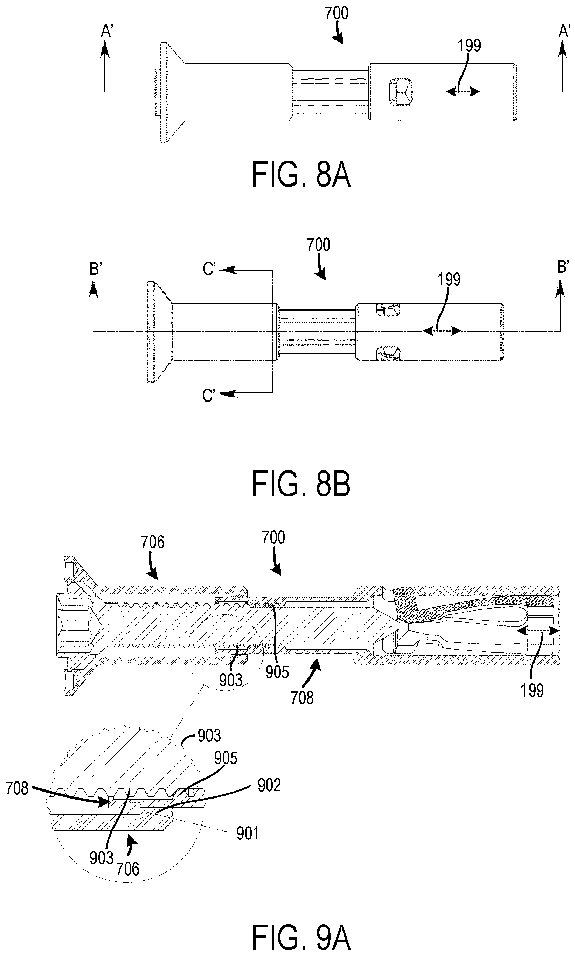

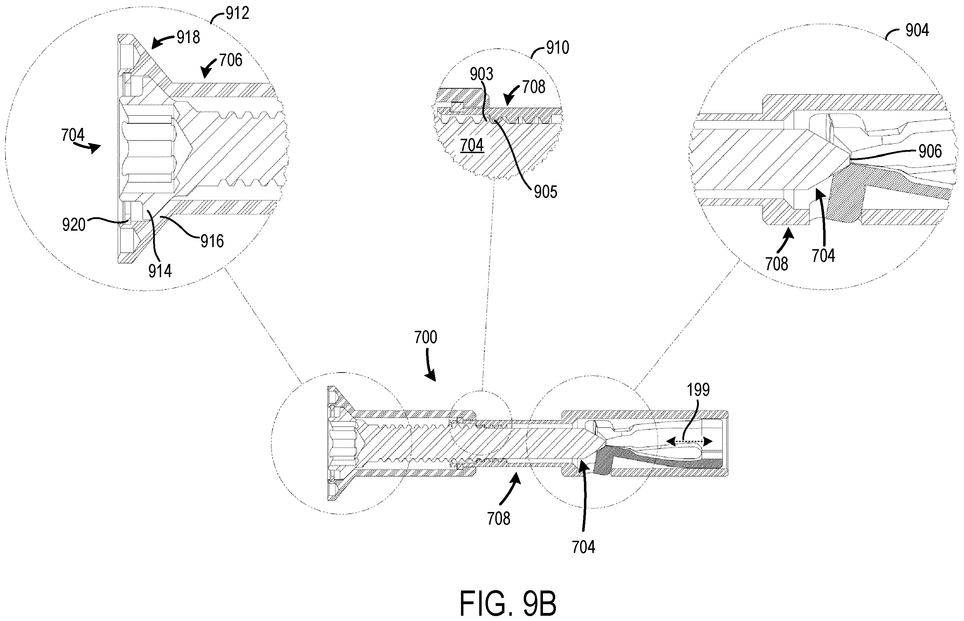

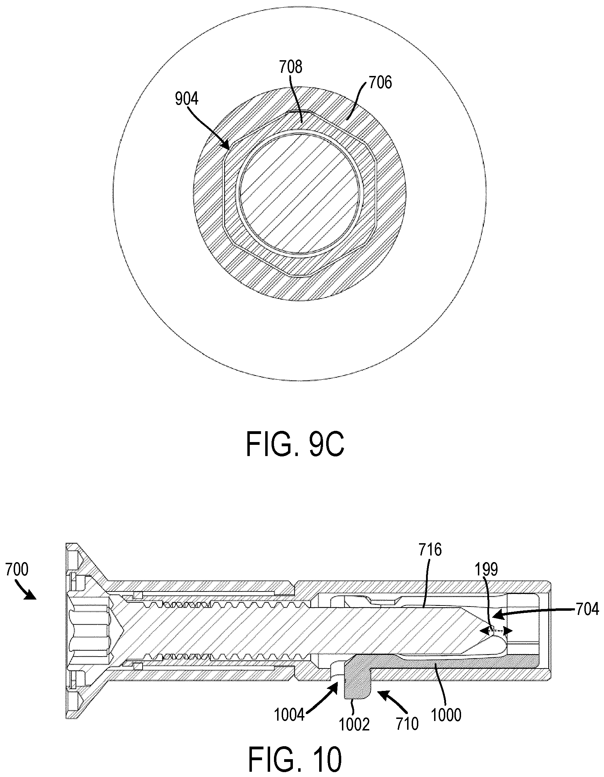

FIGS. 8A shows the fastener 700 in an unclamped state. Cutting plane A'-A', illustrated in FIG. 8A, denotes the cross-sectional view depicted in FIG. 9A as well as the cross-sectional view in FIG. 10. However, it will be understood, that the fastener is in a different clamping configuration in FIG. 10. Cutting planes B'-B' and C'-C', illustrated in FIG. 8B, denote the cross-sectional views depicted in FIG. 9B and 9C, respectively.

FIG. 9A shows the fastener 700 with the housing 706 and the drive sleeve 708. To elaborate, in an enlarged view 900 of a snap mechanism 901 (e.g., a snap ring, grooves, and/or machined steps) that inhibits the drive sleeve 708 from sliding out of the housing 706. To elaborate, a seat 902 at the distal end of the housing (which has a smaller diameter than the upper housing bore) interacts with the snap mechanism 901 to prevent the sleeve from falling out of the housing. In this way, the fastener can be retained as a single assembly.

The fastener 700 shown in FIG. 9A is in a free-spin configuration where threads 903 in the screw 704 are not engaged with threads 905 in the drive sleeve 708. In this way, fastener degradation caused by over-torqueing the screw in the unclamped direction can be avoided. Further, in the free-spin configuration a head 914 of the screw 704 is adjacent to (e.g., in contact with) a retaining ring 920. In other words, the screw head 914 is in an upper axial position. It will therefore be understood that as the fastener 700 transitions into and out of the free-spin configuration the axial positon of the screw 704 in relation to the housing 706 and the drive sleeve 708 changes to allow for engagement and disengagement of the threads 903 in the screw and the threads 905 in the drive sleeve.

FIG. 9B shows the screw 704 threaded into the drive sleeve 708 in enlarged view 909. Further, the distal end 906 of the screw 704 is shown adjacent to the feet prior to leg expansion. As shown in enlarged view 910, the fastener 700 is in a non free-spin configuration where the threads 903 in the screw 704 are threadingly engaged with the threads 905 in the drive sleeve 708. In this way, the fastener is readied for the transition into the clamped configuration. Further, as shown in enlarged view 912, the head 914 of the screw 704 is contacting a seat 916 in the head 918 of the housing 706. Thus, the screw head 914 is spaced away from the retaining ring 920. Thus, the head 914 of the screw is in a lower axial positon in the fastener configuration shown in FIG. 9B.

FIG. 9C shows the polygonal anti-rotation and translation interface 904 established between the drive sleeve 708 and the housing 706.

FIG. 10 shows the fastener 700 in a clamped state where the legs 1000 of the collet body 710 are expanded and the feet 1002 extend outward from the openings 1004. In this clamped state, the unthreaded portion 716 of the screw 704 urges the legs 1000 outwards.

FIGS. 11A, 11B, and 11C show another example of a fastener 1100. The fastener 1100 is similar to the fastener 600 depicted in FIGS. 6A-6C, in certain respects, and redundant description of the overlapping features is omitted for brevity. However, as shown in FIGS. 11A, 11B, and 11C, the protrusions 1102 in the drive sleeve 1104 extend to a lower end 1106 of the sleeve. Further, the slots 1108 in the housing 1109 correspondingly extend to a lower end 1110 thereof.

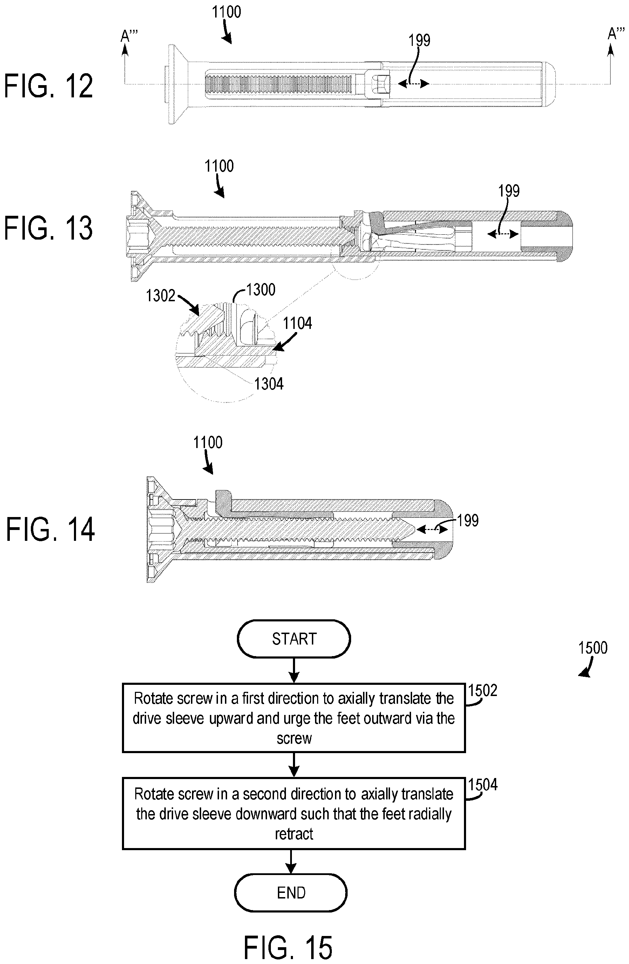

FIG. 12 shows the fastener 1100 in an unclamped configuration. Cutting plane A'''-A‴, illustrated in FIG. 12, denotes the cross-sectional view depicted in FIGS. 13 and 14.

FIG. 13 shows the fastener 1100 in an unclamped configuration and FIG. 14 shows the fastener 1100 in a clamped configuration at the fastener's minimum grip length. FIG. 13 further shows an enlarged view 1300 of the drive sleeve 1104 and the screw 1302. The drive sleeve 1104 includes a stepped section 1304 (e.g., machined steps), in the illustrated example. The stepped section inhibits the sleeve and the housing from sliding apart. However, in other examples, a snap mechanism (e.g., a snap ring) and/or grooves may be alternatively used to inhibit the sleeve and the housing from sliding apart. In this way, the fastener is able to be transported, installed, and removed as an assembly. Consequently, the manufacturing processes utilizing the fastener may be more efficiently implemented, if desired.

FIG. 15 shows a method 1500 for operating a fastener. The method may be implemented by any of the fasteners and tooling apparatuses or combinations of the fasteners and tooling apparatuses described above with regard to FIGS. 1A-14. However, in other examples, the method may be implemented by other suitable fastener systems and/or tooling apparatuses. Still further, at least a portion of the method steps may be manually implemented via manufacturing personnel, in some instances.

At 1502, the method includes rotating the screw in a first direction to axially translate the drive sleeve upward and urge the feet outward via the screw. In this way, the fastener is transitioned into a clamping configuration.

At 1504, the method includes rotating stud in a second direction to axially translate the drive sleeve downward such that the feet radially retract. In this way, the fastener is transitioned into an unclamped configuration.

FIGS. 1A-14 are drawn approximately to scale, aside from the schematically depicted components. However, other relative dimensions may be used, in other embodiments.

FIGS. 1A-14 show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example.

The invention will further be described in the following paragraphs. In one aspect, a fastener is provided that comprises a screw configured to threadingly engage a drive sleeve; a collet body including one or more legs extending from a crown, wherein each of the one or more legs includes a clamping foot that extends therefrom and wherein each of the one or more clamping feet mate with a sleeve opening in the drive sleeve; a housing that mates with the drive sleeve such that rotation of the drive sleeve is prevented and vertical translation is permitted.

In another aspect, a blind fastener is provided that comprises a screw configured to threadingly engage a drive sleeve; a collet body including a crown with a one or more legs extending therefrom, wherein each of the one or more legs includes a clamping foot that extends therefrom and wherein each of the one or more clamping feet mate with a sleeve opening in the drive sleeve; a housing that includes one or more vertically extending slots that mate with drive sleeve protrusion such that the drive sleeve is inhibited from rotating with regard to the housing but is permitted to axially translate in relation to the housing during clamping and unclamping.

In another aspect, a blind fastener is provided that comprises a screw configured to threadingly engage a drive sleeve; a collet body including a crown with one or more legs extending therefrom, wherein each of the one or more legs includes a clamping foot that extends therefrom and wherein the plurality of clamping feet mate with sleeve openings in the drive sleeve; a housing that includes lower polygonal opening which mates with an upper polygonal extension of the drive sleeve.

In any of the aspects or combinations of the aspects, an outer diameter of the sleeve openings may be greater than or equal to an outer diameter of the housing.

In any of the aspects or combinations of the aspects, the housing may include a one or more vertical slots that mate with one or more drive sleeve protrusions and wherein each of the one or more sleeve openings extend outward through one of the one or more drive sleeve protrusions.

In any of the aspects or combinations of the aspects, the drive sleeve protrusions may axially extend to a distal end of the drive sleeve and wherein the plurality of vertical slots extend to a distal end of the housing.

In any of the aspects or combinations of the aspects, a head of the screw may be axially delimited in an upper opening of the housing via a retaining ring.

In any of the aspects or combinations of the aspects, each of the sleeve openings may circumferentially surround the associated clamping foot.

In any of the aspects or combinations of the aspects, the fastener may further comprise a cap mated with a lower opening in the drive sleeve.

In any of the aspects or combinations of the aspects, the collet body may include one or more legs.

In any of the aspects or combinations of the aspects, the one or more vertically extending slots may not extend to a lower end of the housing.

In any of the aspects or combinations of the aspects, each of the sleeve openings may extend around an upper side, a lower side, and laterally opposing sides of the associated clamping foot.

In any of the aspects or combinations of the aspects, a lower end of the screw may not extend beyond a lower opening of the drive sleeve when the fastener is in a minimum grip length configuration.

In any of the aspects or combinations of the aspects, an outer diameter of the housing and an outer diameter of the drive sleeve may be substantially equivalent.

In any of the aspects or combinations of the aspects, the screw may include an unthreaded portion below a threaded portion.

In any of the aspects or combinations of the aspects, the blind fastener may further comprise a snap mechanism positioned within the housing and configured to inhibit decoupling of the drive sleeve from the housing.

In any of the aspects or combinations of the aspects, the one or more clamping feet may be positioned above the crown in relation to a central axis of the fastener.

In any of the aspects or combinations of the aspects, an outer diameter of the one or more sleeve openings may be greater than an inner diameter of the housing.

In any of the aspects or combinations of the aspects, the sleeve may include a lower cylindrical section that form lower ends of the plurality of sleeve openings.

In any of the aspects or combinations of the aspects, in a free-spin configuration a head of the screw may be axially captured in a head of the housing and may be able to independently rotate in relation to the drive sleeve.

In any of the aspects or combinations of the aspects, the plurality of vertical slots may extend to a distal end of the housing.

In another representation, a singled sided fastener is provided that includes a screw, a first housing body that threadingly engaged with the screw and includes protrusions that mate with slots in a second housing body, and a collet body with legs that mate with openings in the first housing body, wherein in a free-spin configuration the screw is axially captured in a head of the second housing body but is able to independently rotate with regard to the first housing body.

Note that the example control and estimation routines included herein can be used with various fastener system configurations. The control methods and routines disclosed herein may be stored as executable instructions in non-transitory memory and may be carried out by a tooling apparatus.

The specific routines described herein may represent one or more of any number of processing strategies such as event-driven, interrupt-driven, multi-tasking, multi-threading, and the like. As such, various actions, operations, and/or functions illustrated may be performed in the sequence illustrated, in parallel, or in some cases omitted. Likewise, the order of processing is not necessarily required to achieve the features and advantages of the example embodiments described herein, but is provided for ease of illustration and description. One or more of the illustrated actions, operations and/or functions may be repeatedly performed depending on the particular strategy being used. Further, the described actions, operations and/or functions may graphically represent code to be programmed into non-transitory memory of the computer readable storage medium in a device such as a tooling apparatus, where the described actions are carried out by executing the instructions in a tooling apparatus and a fastener including the various components.

It will be appreciated that the configurations and routines disclosed herein are exemplary in nature, and that these specific embodiments are not to be considered in a limiting sense, because numerous variations are possible. For example, the above technology can be applied to a broad range of manufacturing fields such as the aerospace industry, the construction industry, the maritime industry, etc. The subject matter of the present disclosure includes all novel and non-obvious combinations and sub-combinations of the various systems and configurations, and other features, functions, and/or properties disclosed herein.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A fastener, comprising:
a screw configured to threadingly engage a drive sleeve;
a collet body including one or more legs extending from a crown, wherein each of the one or more legs includes a clamping foot that extends therefrom and wherein each of the one or more clamping feet mate with a sleeve opening in the drive sleeve; and
a housing that mates with the drive sleeve such that rotation of the drive sleeve is prevented and vertical translation is permitted.

2. The fastener of claim 1, wherein an outer diameter of the one or more sleeve openings is greater than an inner diameter of the housing.

3. The fastener of claim 1, wherein the housing includes a one or more vertical slots that mate with one or more drive sleeve protrusions.

4. The fastener of claim 3, wherein each of the one or more sleeve openings extend outward through one of the drive sleeve protrusions in the one or more drive sleeve protrusions.

5. The fastener of claim 3, wherein the sleeve includes a lower cylindrical section that form lower ends of the one or more sleeve openings.

6. The fastener of claim 3, wherein the one or more drive sleeve protrusions axially extend to a distal end of the drive sleeve.

7. The fastener of claim 3, wherein the one or more vertical slots extend to a distal end of the housing.

8. The fastener of claim 1, wherein a head of the screw is axially delimited in an upper opening of the housing via a retaining ring.

9. The fastener of claim 1, further comprising a cap mated with a lower opening in the drive sleeve.

10. The fastener of claim 1, wherein in a free-spin configuration a head of the screw is axially captured in a head of the housing and is able to independently rotate in relation to the drive sleeve.

11. The fastener of claim 1, wherein a lower end of the screw does not extend beyond a lower opening of the drive sleeve when the fastener is in a minimum grip length configuration.

12. The fastener of claim 1, wherein the one or more clamping feet are positioned above the crown in relation to a central axis of the fastener.

13. The fastener of claim 1, further comprising a snap mechanism positioned within the housing and configured to inhibit decoupling of the drive sleeve from the housing.

14. The fastener of claim 1, wherein each of the one or more sleeve openings extends around an upper side, a lower side, and laterally opposing sides of the associated clamping foot.

15. The fastener of claim 1, wherein:
an outer diameter of the housing and an outer diameter of the drive sleeve are substantially equivalent; and/or
the screw includes an unthreaded portion positioned below a threaded portion.
